# EUROPEAN PATENT APPLICATION

(11) **EP 4 572 359 A1**
(43) Date of publication of application: **18.06.2025**
(21) Application number: 23307190.1
(22) Date of filing: 13.12.2023
(51) Int. Cl.: H04W 12/06, H04W 12/041

(54) **A METHOD FOR ESTABLISHING A SECURE COMMUNICATION CHANNEL BETWEEN A MOBILE DEVICE AND A GNB OF A VISITED NETWORK, CORRESPONDING SECURE ELEMENT AND EQUIPMENT**

(71) Applicant: THALES DIS FRANCE SAS, 92190 Meudon (FR)
(72) Inventor: DEMARTY, Joel, 13705 LA CIOTAT (FR); DANY, Vincent, 13705 LA CIOTAT (FR)
(74) Representative: Scheer, Luc

(57) **Abstract**

The invention concerns a method for establishing a secure communication channel between a mobile device 11 collaborating with a secure element 10 and a gNB 12 of a visited network 1, the method comprising:
- sending from the mobile device 11 to an equipment 14 of the home network 2 of the secure element 10 a SUCI comprising an Alternate SUPI and the real SUPI of the secure element 10;
- at the equipment 14, retrieving the Alternate SUPI and the real SUPI by decrypting the SUCI;
- performing a mutual authentication between the secure element 10 and the equipment 14 by using the real SUPI according to 3GPP TS 33.501;
- sending from the equipment 14 to the AMF/SEAF 13 of the visited network 1 the Alternate SUPI and a key K_{SEAF};
- establishing the secure communication channel between the mobile device 11 and the gNB 12 by:
▪ at the AMF/SEAF 13, deriving a key K_{AMF} from the key K_{SEAF} and the Alternate SUPI;
▪ at the AMF/SEAF 13, deriving a key K_{gNB12} from the key K_{AMF};
▪ at the mobile device 11, deriving the key K_{gNB 12} from the keys CK, IK of the secure element 10 and the Alternate SUPI.

## Description

The present invention concerns telecommunication systems and more precisely 5G networks where a mobile device, like a smartphone, a PDA, a PC, an loT device like a watch for example, enters in a roaming network.

The roaming network can be a public or a private network.

A mobile device typically cooperates with a secure element like a SIM card, a UICC card (removable secure element), or an eSE (embedded secure element) like an eUICC (embedded UICC) or an iUICC (integrated UICC). In the case of a loT device, the secure element is called a MIM (Mobile Information Management) module.

In telecommunication systems, network operators allocate to each secure element a unique identifier, known up to the 4G as an IMSI (International Mobile Subscriber Identity) and for the 5G as a SUPI (Subscription Permanent Identifier). As authentication between a user and its network provider is based on a shared symmetric key, it can only take place after user identification. However, if the IMSI/SUPI values are sent in plaintext over the radio access link, then users can be identified, located and tracked using these permanent identifiers.

To avoid this privacy breach, the secure element is assigned temporary identifiers (called Temporary Mobile Subscriber Identity (TMSI) until 3G systems and GUTI for 4G and 5G systems) by the visited network. These frequently changing temporary identifiers are then used for identification purposes over the radio access link. However, there are certain situations where authentication through the use of temporary identifiers is not possible e.g., when a user registers with a network for the first time and is not yet assigned a temporary identifier, another case is when the visited network is unable to resolve the IMSI/SUPI from the presented TMSI/GUTI. An active man-in-the-middle adversary can intentionally simulate this scenario to force an unsuspecting user to reveal its long-term identity. These attacks are known as "IMSI catching" attacks and persist in today's mobile networks including the 4G LTE/LTE-Adv.

In 5G systems, 3GPP security specifications do not allow plain-text transmissions of the SUPI over the radio interface. Instead, an Elliptic Curve Integrated Encryption Scheme (ECIES)- based privacy-preserving identifier containing the concealed SUPI is transmitted. This concealed SUPI is known as SUCI (Subscription Concealed Identifier).

A SUPI is a 5G globally unique Subscription Permanent Identifier (SUPI) allocated to each subscriber and defined in 3GPP specification TS 23.501. The SUPI value is provisioned in the secure element and in the UDM/UDR function in 5G Core.

A valid SUPI can be either of the following:
▪ An IMSI (International Mobile Subscriber Identifier) as defined in TS 23.503 for 3GPP RAT;
▪ A NAI (Network Access Identifier) as defined in RFC 4282 based user identification as defined in TS 23.003 for non-3GPP RAT.

A SUPI is usually a string of 15 decimal digits. The first three digits represent the Mobile Country Code (MCC) while the next two or three form the Mobile Network Code (MNC) identifying the network operator. The remaining (nine or ten) digits are known as Mobile Subscriber Identification Number (MSIN) and represent the individual user of that particular operator. SUPI is equivalent to IMSI which uniquely identifies the subscriber. The SUPI can be based on the IMSI or being a real NAI (which length is not predefined).

The SUCI is a privacy preserving identifier containing the concealed SUPI. The UE (ME+ secure element) generates a SUCI using an ECIES-based protection scheme with the public key of the Home Network that was securely provisioned to the USIM (secure element) during the USIM personalization.

Only the MSIN part of the SUPI gets concealed by the protection scheme while the home network identifier e.g., MCC/MNC is transmitted in plain text (in case of a SUPI having the format of a NAI, a MCC/MNC is not mandatory).

IMSI privacy has been designed to provide privacy on the air interface against IMSI catcher. But for lawful interception reasons, when a subscriber is in roaming, the home network must provide to the visited network the SUPI in clear (to ensure that the provided SUPI is the correct one, the SUPI is used as input for the AMF key (K_{AMF}) derivation).

This could be problematic when the UE is connected to a roaming network where for the case of applications where anonymity is more important that lawful intercept or when there is concern with the visited network (like the core network of visited PLMN is equipped with network elements from banned vendors in home PLMN).

Because of 3GPP requirements, the problem is that it is not possible to keep privacy in a roaming (visited) network which is a problem because the visited network can be used to eavesdrop the UE.

To solve this privacy problem, it is possible to change the IMSI to enable full anonymity (SUCI is concealing the SUPI which contains the IMSI). However, this solution prevents the home network to identify the UE.

The present invention proposes a solution to this problem.

More precisely, the invention proposes a method according to claims 1 to 4, a corresponding secure element according to claims 5 and 6 and an equipment of a home network according to claims 7 and 8.

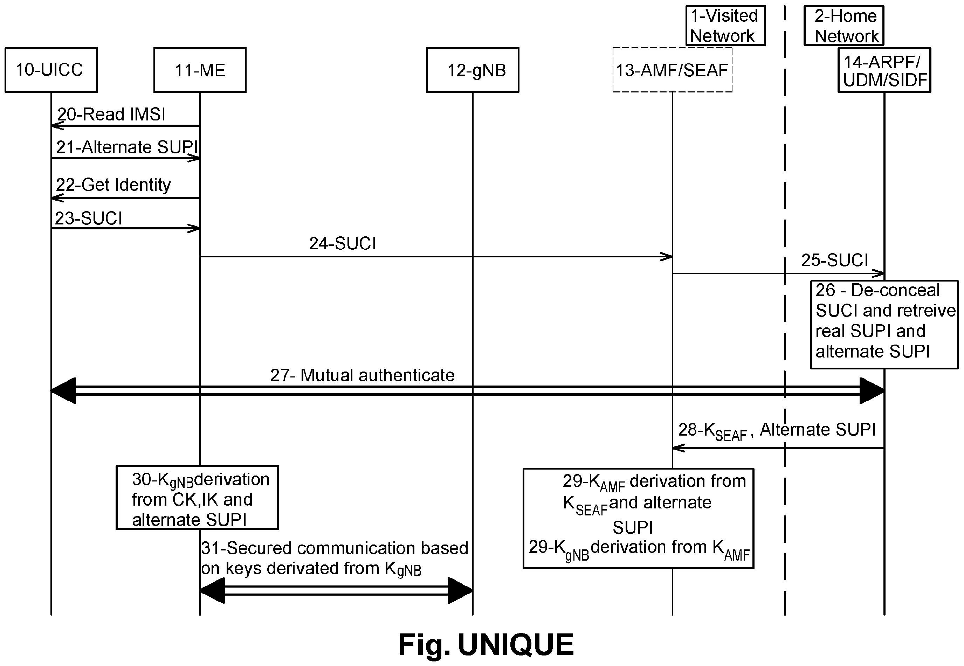

The present invention will be better understood by reading the following description of the unique figure that represents an example of a flowchart of messages exchanged between different entities of 5G networks. This flowchart represents a preferred implementation of the invention but can be conducted in other ways.

In this figure, a visited network 1 and a home network 2 are represented. The home network 2 is the network chosen by a subscriber who owns the secure element.

In the visited network 1, a mobile device 11 (here noted ME standing for Mobile Equipment) collaborating with a secure element 10 (here noted UICC standing for Universal Integrated Circuit Card) is present. The terms "device" and "equipment" related to reference 11 are used interchangeably in the following description. The visited network comprises a gNB (gNodeB) 12 (a base station for 5G networks) and an AMF/SEAF (Access and Mobility Management Function / Security Anchor Function) 13. The SEAF is usually collocated with the AMF and the gNB 12 is linked to the AMF/SEAF 13.

The home network 2 comprises an equipment 14 comprising an ARPF/UDM/SIDF (Authentication credential Repository and Processing Function / Unified Data Management (equivalent to a HSS in 4G) / Subscription Identifier De-concealing Function) 14. The first exchanged message 20 is a read IMSI or NAI (SUPI) command transmitted from the ME 11 to the UICC 10.

At step 21, the UICC 10 answers by transmitting a Alternate SUPI to the ME 11. This Alternate SUPI is different from the real SUPI of the UICC 10.

The generation or transmission of the Alternate SUPI is done before registration to the visited network 1, the EF_IMSI/EF_NAI file is updated with this value and the UICC requests to the ME to retrieve it by a Refresh operation.

The Alternate SUPI can be:
- a random SUPI, or
- a SUPI chosen in a range of predefined Alternate SUPIs, or
- a SUPI previously transmitted by the equipment 14, but in any case, not the real (genuine) SUPI of the UICC 10.

More generally, the Alternate SUPI generation can be:
- either random from a range (like an ephemeral IMSI as described in EP-3.358.868 A1). But there is a risk of detection by an anti-clone mechanism of the visited network (in case a same Alternate SUPI used simultaneously or in too far locations in a short time frame);
- Or deterministic:
   - Based on a predefined list, or
   - The next Alternate SUPI to use is sent by the home network 2 to the secure element 10 during registration thanks to for example a SoR CP container (Steering of Alternate Control Plane). In this case, the SoR CP is used to allow the UDM to provide the card, at the end of a registration N, the Alternate SUPI that the card must use during its next registration N+1. That is to say that the Alternate SUPI is a SUPI sent by the equipment 14 to the secure element 10 during a previous registration 27 of the secure element 10 at the equipment 14 in a SoR CP container.

At step 22, the ME 11 requests the identity of the UICC 10 and, at step 23, the UICC 10 replies by sending a SUCI comprising an Alternate SUPI and the real SUPI of the secure element. The ME 11, at this stage, owns the Alternate SUPI and the real SUPI of the UICC 10, encrypted in the SUCI.

A step 24, the mobile device 11 sends to an equipment of the home network 2, through the AMF/SEAF 13 of the visited network 1 (step 25) this SUCI.

At step 26, the equipment 14 of the home network 2 (here an ARPF/UDM/SIDF) retrieves the Alternate SUPI and the real SUPI by decrypting the SUCI received at step 25. The SIDF performs the decryption of the SUCI.

A mutual authentication (step 27) between the secure element 10 and the equipment 14 can then be performed by using the key retrieved in the equipment 14 thanks to the real SUPI according to 3GPP TS 33.501

At step 28, the equipment 14 sends to the AMF/SEAF 13 of the visited network 1 the Alternate SUPI and a key K_{SEAF}. This key K_{SEAF} is an anchor key derived by the ME 11 and AUSF (Authentication Server Function) from K_{AUSF}. The exchanges between the AMF/SEAF 13 and the ARPF/UDM/SIDF 14 are protected by using a VPN.

The AUSF is linked to the UDM of the home network 2. It is responsible for verifying the identity of a subscriber, validating its subscription data, and determining the appropriate security context for the subscriber.

One of the primary functions of the AUSF is to support 5G authentication and authorization procedures. When a subscriber attempts to connect to a 5G network, the AUSF verifies its identity and ensures that it has the proper authorization to access the network.

The AUSF interacts with the Access and Mobility Management Function (AMF) to manage subscriber mobility and handover procedures. It also interacts with the Unified Data Management (UDM) function to manage subscriber data and profiles.

At step 29, the AMF/SEAF 13:
- derives a key K_{AMF} from the key K_{SEAF} and the Alternate SUPI;
- derives a key K_{gNB} from the key K_{AMF} (the key K_{AMF} is stored in the AMF/SEAF 13).

In parallel, after or before step 29, at step 30 the mobile device or equipment 11 derives the key K_{gNB} from the keys CK, IK of the secure element 10 and the Alternate SUPI.

At this stage, the visited network only owns the Alternate SUPI with which it can establish a secured communication between the gNB 12 and the ME 11 (step 31). On his side, the ME uses the Alternate SUPI to establish this secured communication with the gNB 12. A secure communication channel has thus been established between the mobile device 11 and the gNB 12 of the visited network 1.

In a nutshell, the home network 2 uses the real SUPI of the secure element 10 for identifying the UE and the visited network 1 uses the Alternate SUPI of the secure element 10 for identifying the UE. Therefore, the real SUPI of the secure element 10 is never disclosed to the visited network 11 and confidentiality is preserved.

The equipment 14 is preferably an ARPF/UDM/SIDF but any other equipment performing the same functions can be used instead.

The invention also concerns a secure element 10 intended to cooperate with a mobile device 11, the secure element 10 being configured for:
- providing to the mobile device 11 an Alternate SUPI and its real SUPI;
- performing a mutual authentication between the mobile device 11 and an equipment of the home network of the secure element by using the real SUPI of the secure element according to 3GPP TS 33.501.

The secure element can be one of a:
- UICC card;
- eSim;
- eUICC;
- iUICC
- MIM.

The invention also concerns an equipment 14 of a home network 2 of a secure element 10, the secure element 10 cooperating with a mobile device 11, the equipment 14 being configured for:
- receiving from the mobile device 11 a SUCI comprising an Alternate SUPI and the real SUPI of the secure element 10;
- retrieving the Alternate SUPI and the real SUPI by decrypting the SUCI;
- sending to an AMF/SEAF 13 of a network 1 visited by the mobile device 11 the Alternate SUPI and a key K_{SEAF} in order to allow a gNB 12 of the visited network 1 to establish a secure communication channel between the mobile device 11 and the gNB 12 by:
   ∘ at the AMF/SEAF 13, deriving a key K_{AMF} from the key K_{SEAF} and the Alternate SUPI;
   ∘ at the AMF/SEAF 13, deriving a key K_{gNB} from the key K_{AMF};
   ∘ at the mobile device 11, deriving the key K_{gNB} from the keys CK, IK of the secure element 10 and the Alternate SUPI.

The periodicity of re-registration with a new Alternate SUPI is preferably a mix of:
- Timing (randomly in a defined each)
- Location evolution
- End user manual action

The invention applies to public networks and private networks. It applies to mobile network operators (MNO), mobile virtual network operators (MVNO), non-public network operators (NPNO) and Satellite Network Operators (SNO) using 5G technology. It applies to 5G networks including 5G NTN networks, and also to 6G networks in the future.

## Claims

1. A method for establishing a secure communication channel between a mobile device (11) collaborating with a secure element (10) and a gNB (12) of a visited network (1), said method comprising:
- sending from said mobile device (11) to an equipment (14) of the home network (2) of said secure element (10) a SUCI comprising an Alternate SUPI and the real SUPI of said secure element (10);
- at said equipment (14), retrieving said Alternate SUPI and said real SUPI by decrypting said SUCI;
- performing a mutual authentication between said secure element (10) and said equipment (14) by using said real SUPI according to 3GPP TS 33.501;
- sending from said equipment (14) to the AMF/SEAF (13) of said visited network (1) said Alternate SUPI and a key K_{SEAF};
- establishing said secure communication channel between said mobile device (11) and said gNB (12) by:
∘ at said AMF/SEAF (13), deriving a key K_{AMF} from said key K_{SEAF} and said Alternate SUPI;
∘ at said AMF/SEAF (13), deriving a key K_{gNB(12)} from said key K_{AMF};
∘ at said mobile device (11), deriving said key K_{gNB(12)} from the keys CK, IK of said secure element (10) and said Alternate SUPI.

2. The method according to claim 1, wherein said Alternate SUPI is:
- a random SUPI, or
- a SUPI chosen in a range of predefined Alternate SUPIs;
- a SUPI previously transmitted by said equipment (14).

3. The method according to claim 1 or 2, wherein said Alternate SUPI is a SUPI sent by said equipment (14) to said secure element (10) during a previous registration (27) of said secure element (10) at said equipment (14) in a SoR CP container.

4. The method according to any of the claims 1 to 3 wherein said equipment (14) is an ARPF/UDM/SIDF.

5. A secure element (10) intended to cooperate with a mobile device (11), said secure element (10) being configured for:
- providing to said mobile device (11) an Alternate SUPI and its real SUPI;
- performing a mutual authentication between said mobile device (11) and an equipment (14) of the home network (2) of said secure element (10) by using said real SUPI according to 3GPP TS 33.501.

6. The secure element (10) according to claim 5 wherein it is one of a:
- UICC card;
- eSim;
- eUICC;
- iUICC;
- MIM.

7. Equipment (14) of a home network (2) of a secure element (10), said secure element (10) cooperating with a mobile device (11), said equipment (14) being configured for:
- receiving from said mobile device (11) a SUCI comprising an Alternate SUPI and the real SUPI of said secure element (10);
- retrieving said Alternate SUPI and said real SUPI by decrypting said SUCI;
- sending to an AMF/SEAF (13) of a network visited by said mobile device (11) said Alternate SUPI and a key K_{SEAF} in order to allow a gNB (12) of said visited network (1) to establish a secure communication channel between said mobile device (11) and said gNB (12) by:
∘ at said AMF/SEAF (13), deriving a key K_{AMF} from said key K_{SEAF} and said Alternate SUPI;
∘ at said AMF/SEAF (13), deriving a key K_{gNB(12)} from said key K_{AMF};
∘ at said mobile device (11), deriving said key K_{gNB(12)} from the keys CK, IK of said secure element (10) and said Alternate SUPI.

8. The equipment (14) according to claim 7, wherein it consists in an ARPF/UDM/SIDF.
